# EUROPÄISCHE PATENTANMELDUNG

(11) **EP 0 855 552 A2**
(43) Veröffentlichungstag der Anmeldung: **29.07.1998**
(21) Anmeldenummer: 97120474.8
(22) Anmeldetag: 21.11.1997
(51) Int. Cl.: F21S 1/02, F21S 3/00, F21V 8/00

(54) **Beleuchtungsanordnung für Arbeitsplätze**

(30) Priorität: 23.01.1997 DE 19702344
(71) Anmelder: Zumtobel Staff GmbH, 6851 Dornbirn (AT)
(72) Erfinder: Wolber, Wolfgang Dr., 6840 Götzis (AT)
(74) Vertreter: Schmidt-Evers, Jürgen, Dipl.-Ing.

(57) **Zusammenfassung**

Es wird eine Beleuchtungsanordnung, insbesondere für einen Arbeitsplatz (1), vorgeschlagen, die erfindungsgemäß aus einer Trennwand (4) im Sichtfeld des Arbeitsplatzbenutzers (2) und insbesondere hinter einem Arbeitsmittel (3), und wenigstens einer der Trennwand (4) speziell zugeordneten Lichtquelle (5) besteht, die derart angeordnet ist, daß die Trennwand (4) Licht geringer Leuchtdichte in Richtung des Arbeitsplatzes (1) aussendet oder reflektiert. Die Trennwand (4) kann sowohl freistehend verwendet als auch in bzw. an einer Raumwand (10) angebracht werden. Durch die erfindungsgemäße Beleuchtungsanordnung wird ein angenehmes und blendfreies Sehumfeld am Arbeitsplatz (1) geschaffen, was das Wohlbefinden steigert und einer schnellen Ermüdung entgegenwirkt.

## Beschreibung

Die Erfindung betrifft eine Beleuchtungsanordnung, insbesondere für einen Arbeitsplatz, nach Anspruch 1.

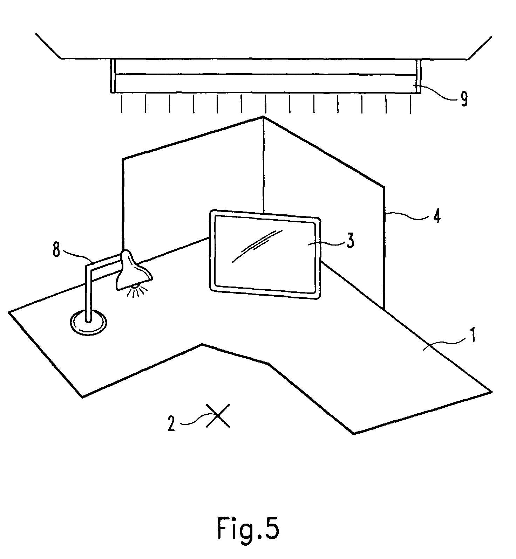

In Figur 5 ist der Aufbau eines typischen Arbeitsplatzes dargestellt, wie er heute in vielen Büros üblich ist. Der Arbeitsplatzbenutzer 2 sitzt gewöhnlich an einem Schreibtisch oder einem ähnlichen Arbeitsplatz 1, auf dem sich ein oder mehrere Arbeitsmittel 3, wie beispielsweise PC's mit Bildschirmgeräten befinden. Hinter dem Bildschirmgerät 3, in Blickrichtung des Arbeitsplatzbenutzers 2, ist eine Trennwand 4 aufgebaut. Diese Trennwand 4 dient als Blendschutz gegen hohe Leuchtdichten im Gesichtsfeld des Arbeitsplatzbenutzers 2 und/oder als optische Abtrennung des Arbeitsplatzes 1 vom übrigen Büroraum, insbesondere im Fall von Großraumbüros. Anstelle des Aufbaus einer Trennwand 4 sind die Arbeitsplätze 1 auch häufig zu einer Raumwand 4 hin orientiert.

Durch solche Trennwände 4 oder durch die Orientierung des Arbeitsplatzes 1 zu einer Wand hin entstehen oft sehr unterbelichtete oder unbeleuchtete, also lichtarme Arbeitsplätze. Im besonderen ist der Hintergrund zum Arbeitsmittel 3, beispielsweise die Wand hinter dem Bildschirm, dunkel. Die an diesen Arbeitsplätzen arbeitenden Menschen 2 empfinden die Lichtarmut oft als ermüdend bzw. störend.

Bei üblichen Beleuchtungslösungen wird der Arbeitsplatz 1 durch decken- oder möbelmontierte Leuchten 9 und/oder durch Tischleuchten 8 beleuchtet. Speziell bei Arbeitsplätzen 1 mit Trennwänden 4 oder zu Wänden hin orientierten Arbeitsplätzen 1 wird durch solche Beleuchtungseinrichtungen 8, 9 ein unbefriedigendes, weil zu niedriges Beleuchtungsniveau erreicht. Dieses Niveau ist bedingt durch die gegensätzlichen Anforderungen von Arbeitsplatzbeleuchtung als solcher und Vermeidung von Reflexblendung auf dem Arbeitsmittel bzw. Bildschirm 3. Durch geringe Reflexionsgrade der Trennwände 4 bzw. Wände ist deren Leuchtdichte außerdem so niedrig, daß ein dunkler Eindruck am Arbeitsplatz 1 entsteht.

Ausgehend vom bisherigen Stand der Technik ist es deshalb eine Aufgabe der vorliegenden Erfindung, eine Beleuchtungsanordnung für einen Arbeitsplatz vorzusehen, welche zur Steigerung des Wohlbefindens am Arbeitsplatz und, um einem schnellen Ermüden entgegenzuwirken, ein angenehmes Sehumfeld mit möglichst idealen Lichtverhältnissen für den Arbeitsplatzbenutzer schafft.

Diese Aufgabe wird gelöst durch die Merkmale des Anspruches 1. Dadurch daß die Trennwand hinter dem Arbeitsmittel, also z.B. hinter einem Bildschirmgerät, sozusagen als selbstleuchtende Beleuchtungs- bzw. Leuchteinrichtung mit relativ geringer Leuchtdichte ausgeführt ist, wird am Arbeitsplatz ein angenehmes und blendfreies Sehumfeld geschaffen, was das Wohlbefinden am Arbeitsplatz steigert und einer schnellen Ermüdung entgegenwirkt. Die erfindungsgemäße Beleuchtungsanordnung wird im allgemeinen zusätzlich zu den üblichen Beleuchtungslösungen eingesetzt.

Bei der Orientierung des Arbeitsplatzes zu einer Raumwand hin, wird die erfindungsgemäße Beleuchtungsanordnung vorteilhafterweise in diese Wand integriert oder an deren Oberfläche befestigt.

Weitere Ausgestaltungen und Weiterbildungen der Erfindung sind Gegenstand weiterer Unteransprüche.

Verschiedene Ausführungsbeispiele der vorliegenden Erfindung werden im folgenden anhand der Zeichnung näher erläutert. Darin zeigen:
- Figur 1: ein erstes Ausführungsbeispiel einer erfindungsgemäßen Beleuchtungsanordnung;
- Figur 2: ein zweites Ausführungsbeispiel einer erfindungsgemäßen Beleuchtungsanordnung;
- Figur 3: ein drittes Ausführungsbeispiel einer erfindungsgemäßen Beleuchtungsanordnung;
- Figur 4: eine Variante des ersten Ausführungsbeispieles; und
- Figur 5: den Aufbau eines typischen Arbeitsplatzes in Prinzipdarstellung.

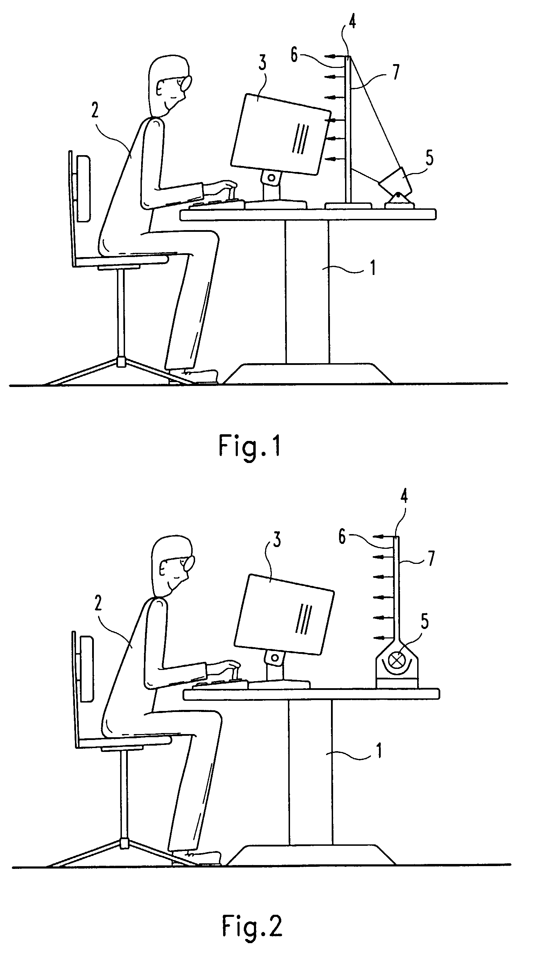

Im folgenden werden anhand der Figuren 1 bis 4 verschiedene Ausführungsbeispiele der erfindungsgemäßen Beleuchtungsanordnung beschrieben. Gleiche Elemente sind dabei jeweils mit gleichen Bezugszeichen versehen. Für den erfindungsgemäßen Gegenstand ist es dabei unerheblich, ob es sich um einen linearen Arbeitsplatz oder um einen Eckarbeitsplatz wie in Figur 5 oder um einen anders gestalteten Arbeitsplatz handelt.

Im ersten Ausführungsbeispiel von Figur 1 ist auf dem Arbeitsplatz bzw. Schreibtisch 1 ein Bildschirmgerät 3 aufgestellt. Der Arbeitsplatzbenutzer 2 sitzt in der gezeigten Ansicht links vom Arbeitsplatz 1 vor dem Bildschirmgerät 3. In Blickrichtung des Arbeitsplatzbenutzers 2 hinter dem Arbeitsmittel 3 befindet sich die erfindungsgemäße Beleuchtungsanordnung aus Trennwand 4 und Lichtquelle 5.

Die Trennwand 4 ist im allgemeinen etwa in einem rechten Winkel zum Schreibtisch 1 orientiert und befindet sich direkt im Anschluß an den Schreibtisch 1 auf einem entsprechenden Unterbau oder, wie in Figur 1 gezeigt, auf dem Schreibtisch 1 selbst. Hinter der Trennwand 4 ist wenigstens eine Lichtquelle 5, wie beispielsweise eine Leuchtstofflampe, angebracht. Die Vorderseite 6 und die Rückseite 7 der Trennwand 4 sind lichtdurchlässig, bevorzugt opal, so daß die Lichtstrahlen von der Lichtquelle 5 durch die Trennwand 4 hindurch in Richtung auf den Arbeitsplatz 1 abgestrahlt werden. Die optischen Eigenschaften der Trennwand 4 und die Anordnung der Lichtquelle(n) 5 sollten so gewählt werden, daß eine gleichmäßige Lichtausstrahlung über die gesamte Fläche der Vorderseite 6 der Trennwand 4 erfolgt.

Die Lichtquelle(n) 5 hinter der Trennwand 4 sind so konstruiert und orientiert, daß nur die Rückseite 7 der Trennwand 4 angestrahlt wird, oder derart durch eine (nicht gezeigte) Abdeckung abgeschirmt, daß die Lichtstrahlen nicht in sämtliche Raumrichtungen abgestrahlt werden, sondern auschließlich in Richtung auf die Rückseite 7 der Trennwand 4. Um die Effizienz, d.h. die Lichtausbeute der Lichtquelle 5 zu erhöhen, kann eine solche Abdeckung an ihrer Innenseite zusätzlich reflektierend ausgebildet sein.

Für den Arbeitsplatzbenutzer 2 erscheint die Trennwand 4 mit der dahinter angeordneten Lichtquelle 5 sozusagen als eine Art selbstleuchtende "Lichtwand", von deren Vorderseite 6 Licht von geringer Leuchtdichte in Richtung auf den Arbeitsplatz 1 ausgestrahlt wird.

Die Lichtquellen bzw. Leuchtstofflampen 5 sind vorzugsweise mittels einer Elektroniksteuerung steuerbar. Mit Hilfe dieser Steuerung ist die Helligkeit der Trennwand 4 für jeden Arbeitsplatzbenutzer 2 nach seinen individuellen Bedürfnissen einstellbar. Dabei sollte das Maß der physiologischen Blendung nie erreicht werden, weshalb die Leuchtdichten der hellsten Stellen an der Vorderseite 6 der Trennwand 4 im Normalbetrieb auf etwa 200 cd/m² begrenzt sind. Die Trennwand 4 kann auch vorübergehend auf große Helligkeiten gebracht werden (maximal etwa 1000 cd/m²), wobei die selbständige Herabsetzung der Helligkeit auf ein geringeres Maß spätestens nach wenigen Minuten sinnvoll ist.

Die Vorderseite 6 der Trennwand 4 kann zudem eine Musterung, beispielsweise in Form von aufgebrachten Bildern oder Grafiken, aufweisen. Hierdurch wird für den Arbeitsplatzbenutzer 2 ein attraktives Sehumfeld geschaffen. Die Leuchtdichtekontraste der Musterung sollten dabei Maximalwerte von etwa 1:20, vorzugsweise von etwa 1:10 nicht übersteigen.

Für den Fall, daß dieser anhand von Figur 1 beschriebene Arbeitsplatz 1 zu einer festen Raumwand 10 hin orientiert ist, befindet sich die Beleuchtungsanordnung zwischen dieser Wand und dem Arbeitsplatz 1.

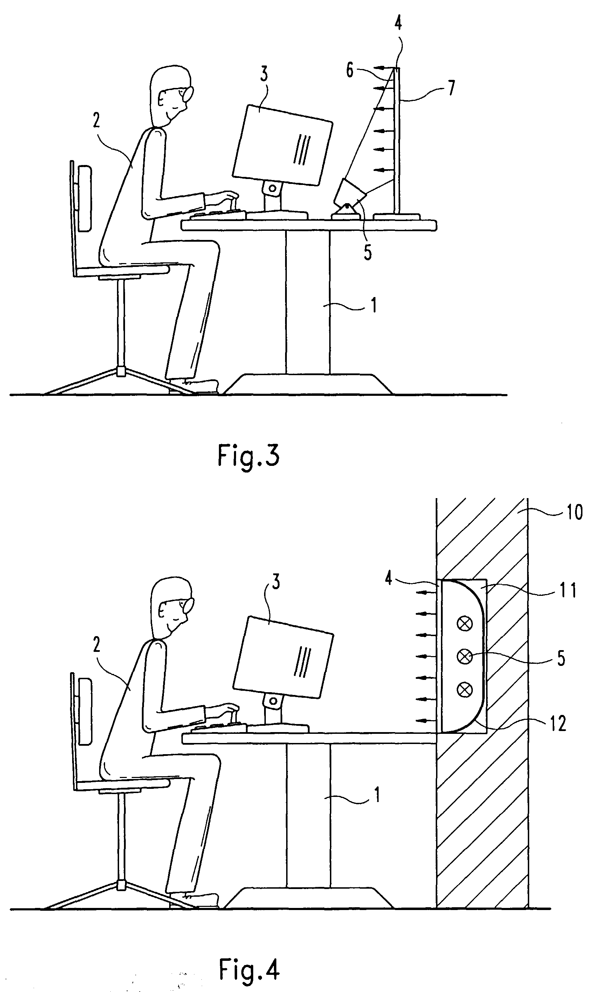

Die beiden Ausführungsbeispiele der Figuren 2 und 3 werden im folgenden nur bezüglich ihrer Besonderheiten und Unterschiede im Gegensatz zum vorbeschriebenen Ausführungsbeispiel beschrieben. Für die Erklärung der verwendeten Elemente und deren Vorteile sei an dieser Stelle nur auf die obigen Erläuterungen verwiesen.

Im zweiten Ausführungsbeispiel befindet sich die Lichtquelle 5, wie in Figur 2 gezeigt, direkt unterhalb der Trennwand 4. Die Lichtstrahlen der Lichtquelle 5 werden unten in die Trennwand 4 eingekoppelt und von der Trennwand 4 an der Vorderseite 6 ausgestrahlt. Die Rückseite 7 ist in diesem Fall lichtundurchlässig ausgebildet.

Bei der zweiten Ausführungsform der erfindungsgemäßen Beleuchtungsanordnung besteht ferner die Möglichkeit, eine Trennwand 4 mit einer Lichtquelle 5 gleichzeitig für zwei einander gegenüberliegende Arbeitsplätze 1 zu verwenden. In diesem Fall müsste auch die Rückseite 7 wie die Vorderseite 6 lichtdurchlässig konstruiert sein. Allerdings sind die Lichtverhältnisse für beide Arbeitsplätze nur gemeinsam steuerbar.

An Stelle der Einkopplung der Lichtstrahlen von unten ist es ebenso möglich, die Lichtstrahlen von oben in die Trennwand 4 einzukoppeln. Aus Gründen der Ästhetik und der Stabilität wird man jedoch meist die Lichtquelle 5 mit der zugehörigen Elektroniksteuerung unterhalb der Lichtwand 4 und somit außerhalb des Blickfelds des Arbeitsplatzbenutzers 2 anordnen.

Figur 3 zeigt als drittes Ausführungsbeispiel die Möglichkeit einer reflektierenden Trennwand 4. Die Lichtquelle bzw. Leuchtstofflampe 5 ist zwischen dem Arbeitsmittel 3 und der Trennwand 4 angeordnet. Die Lichtquelle 5 ist ausschließlich auf die Trennwand 4 gerichtet. Eine Abschirmung der Lichtquelle 5 kann zusätzlich direkte Lichtstrahlen und damit eine Blendung in Richtung des Arbeitsplatzbenutzers 2 und/oder an der Trennwand 4 vorbei verhindern. Die Vorderseite 6 der Trennwand 4 weist entsprechende optische Eigenschaften auf, damit das Licht gleichmäßig von der Trennwand 4 reflektiert und eine Blendwirkung vermieden wird.

Falls der Arbeitsplatz 1 in Blickrichtung des Arbeitsplatzbenutzers 2 zu einer festen Raumwand 10 hin orientiert ist, kann an Stelle der Ausführung einer freistehenden Trennwand 4 hinter dem Arbeitsmittel 3, wie dies in den vorbeschriebenen Ausführungsbeispielen der Fall ist, die Trennwand 4 in diese Raumwand 10 integriert sein. Figur 4 zeigt diese Alternative für das erste Ausführungsbeispiel von Figur 1.

Der im Blickfeld des Arbeitsplatzbenutzers 2 liegende Bereich der Wand 10 hinter dem Bildschirm 3 weist zu diesem Zweck eine Aufnahmeöffnung 11 auf, die mit der Trennwand 4 abgedeckt ist und an deren Innenseite vorzugsweise ein Reflektor 12 angebracht ist. In der Aufnahmeöffnung 11 hinter der Trennwand 4 ist wenigstens eine Lichtquelle 5 angebracht. Die optischen Eigenschaften der Beleuchtungsanordnung 4, 12 und die Anordnung der Lichtquellen 5 sollten so gewählt werden, daß eine gleichmäßige Lichtausstrahlung über die gesamte Fläche der Vorderseite 6 der Trennwand 4 erfolgt.

Für den Arbeitsplatzbenutzer 2 erscheint der Wandbereich 10 mit den darin angeordneten Lichtquellen 5 analog den vorbeschriebenen Ausführungsbeispielen sozusagen als eine Art selbstleuchtende "Lichtwand", von deren Vorderseite 6 Licht von geringer Leuchtdichte in Richtung auf den Arbeitsplatz 1 ausgestrahlt wird.

An Stelle der Integration der erfindungsgemäßen Beleuchtungsanordnung in eine Aufnabmeöffnung 11 der Wand 10, wie in Figur 4 gezeigt, kann die Beleuchtungsanordnung auch an der Wandoberfläche befestigt werden.

Die anhand von Figur 4 beschriebene Alternative der erfindungsgemäßen Beleuchtungsanordnung ist selbstverständlich ebenso für die anhand der Figuren 2 und 3 erläuterten Ausführungsformen anwendbar.

## Patentansprüche

1. Beleuchtungsanordnung, insbesondere für einen Arbeitsplatz (1), bestehend aus einer Trennwand (4) im Sichtfeld des Arbeitsplatzbenutzers (2) und insbesondere hinter einem Arbeitsmittel (3), und wenigstens einer der Trennwand (4) speziell zugeordneten Lichtquelle (5), die derart angeordnet ist, daß die Trennwand (4) Licht geringer Leuchtdichte in Richtung des Arbeitsplatzes (1) aussendet oder reflektiert.

2. Beleuchtungsanordnung nach Anspruch 1,
**dadurch gekennzeichnet,**
daß die zugeordnete Lichtquelle (5) vom Arbeitsplatz (1) aus gesehen hinter der Trennwand (4) angeordnet ist und die nach beiden Seiten (6, 7) lichtdurchlässige Trennwand (4) von hinten anstrahlt.

3. Beleuchtungsanordnung nach Anspruch 1,
**dadurch gekennzeichnet,**
daß die zugeordnete Lichtquelle (5) in die Trennwand (4) von unten oder von oben Licht einkoppelt, welches durch die dem Arbeitsplatz (1) zugewandte lichtdurchlässige Seite (6) der Trennwand (4) austritt.

4. Beleuchtungsanordnung nach Anspruch 1,
**dadurch gekennzeichnet,**
daß die zugeordnete Lichtquelle (5) vom Arbeitsplatz (1) aus gesehen vor der Trennwand (4) angeordnet ist und die Trennwand (4) das Licht in Richtung des Arbeitsplatzes (1) reflektiert.

5. Beleuchtungsanordnung nach einem der vorhergehenden Ansprüche,
**dadurch gekennzeichnet,**
daß die Beleuchtungsanordnung in bzw. an einer Wand (10) angebracht ist.

6. Beleuchtungsanordnung nach einem der vorhergehenden Ansprüche,
**dadurch gekennzeichnet,**
daß die Lichtquelle (5) eine Leuchtstofflampe ist.

7. Beleuchtungsanordnung nach einem der vorhergehenden Ansprüche,
**dadurch gekennzeichnet,**
daß die Lichtquelle (5) steuerbar ist.

8. Beleuchtungsanordnung nach Anspruch 7,
**dadurch gekennzeichnet,**
daß die Leuchtdichte des von der Trennwand (4) ausgesendeten bzw. reflektierten Lichts individuell einstellbar ist.

9. Beleuchtungsanordnung nach einem der vorhergehenden Ansprüche,
**dadurch gekennzeichnet,**
daß die Leuchtdichte des von der Trennwand (4) ausgesendeten bzw. reflektierten Lichts im Normalbetrieb maximal 200 cd/m² beträgt.

10. Beleuchtungsanordnung nach einem der vorhergehenden Ansprüche,
**dadurch gekennzeichnet,**
daß die Trennwand (4) auf der dem Arbeitsplatz (1) zugewandten Seite (6) eine Musterung aufweist.

11. Beleuchtungsanordnung nach Anspruch 10,
**dadurch gekennzeichnet,**
daß die Leuchtdichtekontraste der Musterung maximal 1:20 betragen.
